Europäisches Patentamt

European Patent Office

Office européen des brevets

(11) Numéro de publication : **0 516 521 A1**

(12) # DEMANDE DE BREVET EUROPEEN

(21) Numéro de dépôt : **92401422.8**

(22) Date de dépôt : **25.05.92**

(51) Int. Cl.⁵ : **C08G 73/14,** C09D 179/08, H01B 3/30, C08J 3/11, // (C08J3/11, C08L79:08)

(30) Priorité : **30.05.91 FR 9106521**

(43) Date de publication de la demande : **02.12.92 Bulletin 92/49**

(84) Etats contractants désignés : **AT CH DE ES FR GB IT LI NL SE**

(71) Demandeur : **GEC ALSTHOM SA**
**38, avenue Kléber**
**F-75116 Paris (FR)**

(72) Inventeur : **Foureys, Jean-Luc**
**4, rue François Gillet**
**F-69003 Lyon (FR)**
Inventeur : **Wagner, Richard**
**Lancin**
**F-38510 Courtenay (FR)**
Inventeur : **Anton, Alain**
**Rue de Beauregard, Chaponnay**
**F-69360 Saint-Symphorien-D'Ozon (FR)**

(74) Mandataire : **Vigand, Privat et al**
**SOSPI 14-16, rue de la Baume**
**F-75008 Paris (FR)**

(54) **Procédé de fabrication d'un vernis d'émaillage à base de polyamide-imide et vernis d'émaillage obtenu par ce procédé.**

(57)    Procédé de fabrication d'un vernis d'émaillage à base de polyamide-imides, dans lequel on condense un diisocyanate aromatique ou une diamine correspondante avec un acide polycarboxylique aromatique à au moins trois fonctions carboxyles, ou un anhydride, ester ou halogénure d'acide correspondant, en solution dans la N-méthylpyrrolidone, caractérisé en ce que l'on sépare de la solution réactionnelle les polyamide-imides à l'état de poudre par élimination de la N-méthyl-pyrrolidone, puis en ce que l'on dissout la poudre de polyamide-imides dans un solvant formé au moins en partie par un solvant polaire aprotique autre que la N-méthyl-pyrrolidone.

Vernis fabriqué selon ce procédé stable au stockage et présentant une viscosité réduite facilitant l'émaillage.

La présente invention concerne un vernis d'émaillage à base de polyamide-imide, dans lequel dans lequel on condense un diisocyanate aromatique ou une diamine correspondante avec un acide polycarboxylique aromatique à au moins trois fonctions carboxyles, ou un anhydride, ester ou halogènure d'acide correspondant, en solution dans la N-méthylpyrrolidone.

Elle s'étend en outre à un vernis d'émaillage obtenu par ce procédé.

Les résines polyamide-imides sont obtenues par condensation d'un diisocyanate aromatique, tel que le 4-4' diisocyanate de diphénylméthane, ou d'une diamine correspondante, avec un acide polycarboxylique aromatique à au moins trois fonctions carboxyles, ou un anhydride, un ester ou un halogènure d'acide correspondant, notamment l'anhydride trimellitique, en présence éventuellement d'acide formique ou d'un alcool, dans un solvant polaire aprotique tel que la N-méthyl-pyrrolidone, le diméthylacétamide, le diméthylsulfoxyde, le diméthyl-formamide, le butyrolactone ou l'hexaméthylphosphoro-triamide. Différentes variantes de ce procédé ont fait l'objet des documents FR-A-1422711, FR-A-1501198, GB-A-570858 et FR-A- 2516523.

Pour former un isolant de conducteur électrique, on prépare un vernis à partir du mélange réactionnel, en le diluant généralement à l'aide d'un diluant aromatique, tel que du xylène ou un dérivé aromatique de coupes pétrolières. On dépose ensuite le vernis sur le conducteur en plusieurs couches et assure sa cuisson par passage du fil enduit dans un four à des températures de 300°C à 550°C et plus. L'isolant est déposé soit sur le fil nu, soit plus souvent sur un fil muni d'une sous-couche en polyester ou polyesterimide.

Parmi les solvants polaires aprotiques utilisés actuellement, la N-méthyl-pyrrolidone a donné les meilleurs résultats en ce qui concerne les propriétés des polyamide-imides, car elle permet d'obtenir des polymères à plus longue chaîne et présentant plus de liaisons latérales entre chaînes (réticulation) que les autres. Elle paraît jouer un rôle catalytique dans la réaction de condensation.

L'emploi de la N-méthyl-pyrrolidone comme solvant du vernis, ou comme constituant principal de ce solvant, présente cependant certains inconvénients. Celle-ci constitue en effet un composé réactif et hygroscopique. Les vernis à base de N-méthyl-pyrrolidone présentent des viscosité élevées. Cette viscosité tend à augmenter au cours du stockage, rendant l'opération d'émaillage difficile. Le vernis est sensible à l'hydrolyse et risque de former un gel insoluble s'il est soumis à une température supérieure à 60°C. Du fait de sa température d'ébullition élevée, son élimination au four d'émaillage est difficile. En conséquence, la surface externe de l'émail présente parfois des irrégularités, ce qui réduit son aptitude au glissement et oblige à limiter la vitesse de bobinage du conducteur émaillé.

Dans le cas où l'émail est déposé au-dessus d'une sous-couche en polyester ou polyesterimide, la N-méthyl-pyrrolidone tend à migrer et à attaquer cette sous-couche, en entraînant une dégradation des caractéristiques de l'isolation.

La présente invention a pour but de procurer un vernis d'émaillage à base de polyamide-imide, qui soit plus stable au stockage et de viscosité réduite pour une même teneur en extrait sec, et qui permette d'obtenir sur un conducteur électrique ou une sous-couche isolante, un émail isolant qui conserve les bonnes propriétés physiques et chimiques résultant d'un degré de condensation élevé et de nombreuses liaisons entre chaînes, par une opération d'émaillage facilitée, et dont le cas échéant les propriétés de la sous-couche ne soient pas dégradées par migration du solvant résiduaire d'une surcouche.

Le procédé de fabrication selon l'invention est caractérisé en ce que l'on sépare de la solution réactionnelle les polyamide-imides à l'état de poudre par élimination de la N-méthyl-pyrrolidone, puis en ce que l'on dissout la poudre de polyamide-imides dans un solvant formé au moins en partie par un solvant polaire aprotique autre que la N-méthyl pyrrolidone.

Il répond en outre de préférence à au moins l'une des caractéristiques suivantes :
- la teneur pondérale du solvant de dissolution de la poudre de polyamide-imides en N-méthyl-pyrrolidone est de 0 à à 30 % en poids.
- On effectue la séparation des polyamide-imides en poudre de la solution réactionnelle par précipitation de ceux-ci en présence d'un liquide non solvant.
- On effectue la séparation des polyamide-imides en poudre de la solution réactionnelle par atomisation de celle-ci.
- On récupère la N-méthyl-pyrrolidone à partir de la solution réactionnelle et la recycle comme solvant réactionnel, et éventuellement comme élément du solvant de dissolution de la poudre de polyamide-imides.
- On emploie comme autre solvant polaire aprotique que la N-méthylpyrrolidone la diméthylacétamide, la diméthylformamide, la butyrolactone ou le diméthylsulfoxyde...

Le vernis d'émaillage obtenu selon le procédé défini ci-dessus présente de préférence une viscosité intrinsèque, mesurée dans le N-méthyl-pyrrolidone, au moins égale à 0,4 dl/g.

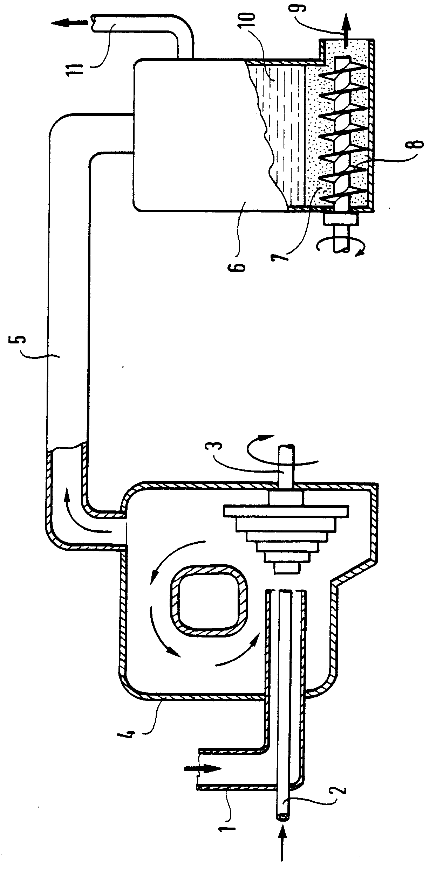

Il est décrit ci-après à titre d'exemples et en référence à la figure unique du dessin annexé, les domaines de conditions opératoires les plus favorables pour la fabrication de vernis selon les procédés connus et des variantes du procédé de l'invention, quelques modes opératoires précis selon l'invention et les propriétés d'émaux obtenus selon les procédés connus et selon l'invention.

Dans ce qui suivra la N-méthyl-pyrrolidone et le diméthylacétamide ont été désignées respectivement pour simplifier par les abréviations NMP et DMAC.

Exemple 1 - Synthèse de polyamide-imides dans la NMP comme solvant réactionnel. Fabrication du vernis, puis stockage de ce vernis et sa mise en oeuvre sur le conducteur ou une sous-couche (procédé connu).

On effectue la polycondensation à partir de polyacides aromatiques carboxyliques ou de leurs dérivés, et de diisocyanates ou des diamines correspondantes, dans un rapport molaire de 0,9 à 1,1 et de préférence sensiblement stoechimétrique, avec un léger excès de diisocyanates. On opère à une concentration pondérale de 20 % à 55 %, de préférence entre 35 % et 40 %, dans la NMP. On peut ajouter une quote-part de diluant aromatique, tel que le xylène, jusqu'à 30 % en poids. La viscosité intrinsèque dans la NMP à 20°C est comprise entre 0,4 et 0,6 dl/g. Le vernis formé a un aspect brun roque foncé limpide.

En fin de condensation, le mélange réactionnel est refroidi rapidement. On le dilue par un mélange de solvant NMP et de diluant aromatique, la proportion finale de diluant étant au maximum de 35 % en poids. L'extrait sec de la solution, mesuré sur 1g, 1 heure, en étuve ventilée à 180°C, est compris entre 25 % et 40 %. La solution reste limpide, de couleur brun rouge. Sa viscosité à 20°C est comprise entre 2000 et 4000 mPas.

Après filtration, le vernis est stocké généralement dans des fûts métalliques à température ambiante, celle-ci pouvant cependant varier de -10°C à +60°C selon le lieu et les conditions de stockage. Les récipients de stockage n'étant jamais parfaitement étanches, il se produit une reprise d'humidité, favorisée par la forte hygroscopicité de la NMP. Celle-ci peut conduire à la formation de pellicules blanchâtres en surface du vernis ou sur les parois du récipient. Ces pellicules repassent généralement en solution par agitation à la température ambiante. Par ailleurs, il se produit une augmentation importante de la viscosité, qui double sur une période de 4 semaines.

Cette augmentation nécessite un ajustement constant des conditions opératoires de revêtement du fil conducteur. En outre, si la température de stockage vient à dépasser +60°C ou si la quantité d'eau absorbée est trop importante, il peut se produire une gélification du vernis, qui devient alors inutilisable.

Lors de la mise en oeuvre du vernis sur le conducteur, son dépôt s'effectue par l'intermédiaire d'applicateurs utilisés habituellement dans le domaine de l'émaillage.

Une fois déposé sur le conducteur, le vernis subit une post-condensation dans un four à des températures pouvant atteindre 550°C et plus, en plusieurs passages. La quasi-totalité du solvant et tous les diluants sont alors vaporisés, et une grande partie en est consommée dans le four.

Lors du vieillissement du fil isolé, son isolant se dégrade quelque peu, du fait de la réactivité chimique de la NMP résiduelle dans l'émail. Celle-ci se traduit par une activité catalytique importante vis-à-vis des fonctions isocyanates du polymère, entraînant de nouvelles liaisons interchaînes, et surtout par une agressivité vis-à-vis de certaines familles chimiques, telles que les polyesters et les polyesterimides. Or les polyamide-imides sont le plus souvent employés comme surcouches sur une première couche isolante formée par un polyester ou un polyesterimide. La NMP migre alors à l'intérieur de l'émail vers la sous-couche et altère les propriétés électriques, mécaniques et chimiques de l'émail, notamment au point de vue de l'endurance thermique. Cette altération se produit aussi avec les vernis d'imprégnation.

Par ailleurs, l'émail en polyamide-imide possède du fait de la présence de la NMP résiduaire, une énergie de surface élevée. Celle-ci nuit au bon glissement du fil émaillé lors de son bobinage, et réduit la vitesse de celui-ci.

Exemple 2 - Synthèse de polyamide-imides dans le diméthylacétamide (DMAC) comme solvant réactionnel. Fabrication du vernis, puis stockage et mise en oeuvre de celui-ci sur le conducteur ou une sous-couche (procédé également connu).

La polycondensation a lieu dans des conditions analogues à celles observées avec la NMP comme solvant, avec les mêmes réactifs dans les mêmes rapports molaires. Cependant le meilleur pouvoir solvant du DMAC permet d'augmenter la concentration lors de la réaction de condensation. A conditions opératoires identiques, la cinétique de la réaction se trouve ralentie, les temps de réaction pouvant même être doublés. On obtient une solution réactionnelle finale, avant dilution, qui présente une viscosité intrinsèque, mesurée à 20°C dans la NMP, de l'ordre de 0,2 dl/g.

La cinétique de la réaction se trouve encore ralentie si l'on ajoute au mélange réactionnel un diluant aromatique, tel que le xylène.

La dilution s'effectue par un mélange de solvant polaire aprotique autre que la NMP, par exemple la DMAC et un diluant aromatique de façon à ce que, la proportion finale de diluant ne dépasse pas 35 %. L'extrait sec de la solution, mesuré en étuve ventilée (1g, 1h, 180°C), est compris entre 25 % et 40 %. La solution reste limpide, de couleur orange foncé. Mais, pour un même extrait sec, la viscosité de la solution est deux fois moindre. Le vernis est également filtré, puis stocké.

Dans les mêmes conditions de stockage que lorsque le solvant est la NMP, l'augmentation de la viscosité avec le temps est plus faible (élévation de 50 % en 4 semaines). La reprise d'humidité est peu importante, et il n'apparaît pratiquement pas de pellicule blanchâtre.

Il est encore nécessaire d'ajuster les conditions de l'opération d'émaillage en fonction de la viscosité du vernis, mais cela est moins systématique, et s'impose moins fréquemment que pour le vernis à solvant NMP. Le vernis gélifie cependant également s'il est stocké au-dessus de 60°C, et devient inutilisable.

Lors de la mise en oeuvre du vernis sur le conducteur, on obtient un isolant de propriétés sensiblement inférieures à celles de l'isolant obtenu à partir d'un vernis à la NMP, ce qui est attribuable à une moindre condensation du polymère en solution. Les températures du four d'émaillage peuvent être abaissées par rapport à celles d'un four alimenté en vernis à la NMP ( ou la vitesse d'avance du conducteur peut être augmentée pour une même température).

Lors du vieillissement du fil isolé, on observe une agressivité moindre de l'émail vis-à-vis d'une sous-couche en polyester ou polyesterimide. Le point d'ébullition plus bas du DMAC entraîne une quantité résiduelle de DMAC dans l'émail moindre. Ceci conjugué avec sa moindre réactivité permet une meilleure tenue de l'isolant au vieillissemenent.

Exemple 3 - Synthèse de polyamide-imides dans la NMP. Séparation d'une poudre de polymère, puis remise en solution de la poudre dans le DMAC. Fabrication du vernis, stockage et mise en oeuvre de celui-ci (selon l'invention).

On effectue la polycondensation dans la NMP comme décrit dans l'exemple 1. On obtient un vernis d'extrait sec (1g, 1h, 180°C en étude ventilée) compris entre 20 % et 55 %, de préférence entre 30 % et 35 %. La viscosité intrinsèque (à 20°C dans la NMP) varie de 0,4 à 0,7 dl/g.

On peut séparer le polymère solide de sa solution par deux voies possibles.

a) séparation par atomisation :

On disperse le polymère en solution en gouttelettes de dimensions contrôlées dans un courant de gaz chaud (air ou azote par exemple). La poudre obtenue est séparée du solvant, qui peut être récupéré après condensation.

b) séparation par précipitation.

On introduit la solution dans une zone de précipitation où elle rencontre un liquide non solvant, tel que l'eau, l'acétone ou le méthanol. Au-delà de cette zone, le polymère peut sédimenter en poudre ou en courtes fibres. La poudre ou les fibres peuvent être filtrées et rincées pour faciliter le séchage.

L'opération de précipitation peut être effectuée dans un appareillage tel que représenté dans la figure.

La solution réactionnelle est introduite par un conduit 1, dans lequel débouche un conduit axial 2, véhiculant le liquide non solvant, par exemple de l'eau, de l'acétone ou du méthanol.

En face de l'extrémité commune des deux tubes, il se forme une suspension de poudre, et un mobile rotatif 3 refoule radialement le mélange de solution réactionnelle, de liquide non solvant et de poudre, qui se recycle partiellement dans un anneau 4. Le mélange liquide chargé de particules solides est évacué par un conduit 5 et introduit dans un récipient de décantation 6. Il s'y sépare en particules humides, qui s'accumulent en 7 dans le fond, avant d'être évacuées par une vis sans fin 8 et un conduit latéral 9, et en mélange liquide, dans la partie supérieure 10, qui est envoyé par le conduit 11 vers un dispositif de séparation et de recyclage du solvant. On peut également séparer la poudre de la phase liquide par filtration.

Les particules humides sont séchées pour éliminer les liquides résiduels jusqu'à une teneur déterminée. Le séchage peut s'effectuer en étuve vers 80°C pendant 16 heures. On obtient une poudre jaune pouvant contenir de 80 à 95 % de matière sèche. Cette poudre est stable et ne fond pas jusqu'à une température de 350°C.

La mesure de sa viscosité intrinsèque donne la même valeur que celle du produit réactionnel avant précipitation.

Son analyse centésimale est proche de celle correspondant aux valeurs théoriques, et son spectre infra-roque est conforme au spectre de référence des polyamide-imides.

La distillation des eaux-mères séparées des particules solides permet la régénération de la NMP, qui peut être réutilisée ultérieurement comme solvant de synthèse.

On effectue alors la remise en solution de la poudre dans le DMAC (ou un mélange solvant DMAC-xylène). Celui-ci est soumis à agitation à la température ambiante, et la poudre y est ajoutée progressivement.

On obtient ainsi un vernis présentant les mêmes caractéristiques physico-chimiques qu'un vernis élaboré par la voie habituelle par dilution du liquide réactionnel de synthèse.

L'extrait sec du vernis obtenu présente une viscosité notablement plus faible que celle d'un vernis obtenu de la manière connue par condensation dans la NMP, à valeur constante de l'extrait sec. Par exemple, pour des extraits secs (mesurés sur 1g, 1 heure, à 180°C) de 27 %, les viscosités à 20°C sont les suivantes :

```
Vernis dans NMP à 100 %...............................3900 mPas.

Vernis dans solvant usuel (NMP-xylène)................2600 mPas.

Vernis dans le DMAC à 100 % ..........................1900 mPas.
```

Il s'avère impossible de distinguer les propriétés de l'émail obtenu à partir d'un vernis réalisé par condensation dans la NMP puis dilution, sans séparation de la poudre, de celles de l'émail obtenu à partir d'un vernis réalisé par séparation de polyamide-imide solide, puis redissolution dans le DMAC.

Ce procédé de séparation d'une poudre, puis de redissolution dans le DMAC, permet d'augmenter la concentration du vernis pour obtenir la viscosité souhaitée, tout en utilisant un solvant moins coûteux. Par ailleurs, le DMAC étant moins hygroscopique que la NMP, le vernis possède une meilleure tenue à l'humidité.

On réduit de façon importante, la variation de la viscosité du vernis au stockage.

Du fait de son point d'ébullition plus bas (166°C contre 200°C), le vernis à solvant DMAC permet des conditions de mise en oeuvre, sur les machines à émailler facilitées. Par ailleurs, la substitution du DMAC à la NMP comme solvant résiduel dans l'émail procure une énergie de surface plus faible, et réduit l'interaction entre surfaces émaillées en polyamide imide et facilite le glissement lors de l'opération de bobinage. Enfin, l'agressivité moindre du DMAC entraîne une meilleure compatibilité avec une sous-couche ou une meilleure tolérance vis-à-vis d'un vernis d'imprégnation, et par suite une meilleure tenue au vieillissement.

Si par contre, après avoir séparé les polyamide-imides en poudre, on les redissout dans la NMP, éventuellement dilué par du xylène, on retrouve les mêmes inconvénients qu'avec un vernis obtenu par synthèse en présence de NMP, sans séparation des polyamide-imides à l'état solide.

On donne ci-après des modes opératoires précis de fabrication de vernis polyamide-imides selon les procédés connus et selon le procédé de l'invention, puis les propriétés des vernis et des émaux obtenus sur conducteur à l'aide de ces vernis

Exemple A - Fabrication d'un vernis par synthèse dans la NMP selon le procédé connu.

On introduit dans un réacteur en verre de 2,5 l, muni d'un agitateur par pale, et surmonté d'un couvercle étanche muni d'un réfrigérant, 861 g de NMP sensiblement anhydre. On ajoute 1,87 g d'acide formique à 98 %. En agitant vigoureusement, on porte la température à 45 °C, puis ajoute 250 g de 4,4' - diphénylméthane diisocyanate, (qui sera désigné ci-après par l'abréviation MDI), à 33,5 % en poids de groupes isocyanates. On ajoute alors 184,3 g d'anhydride trimellitique (qui sera désigné ci-après par l'abréviation TMA). On attend la dissolution totale. On porte ensuite rapidement la température du milieu d'abord à 90°C puis progressivement à 145°C. On maintient cette température sous forte agitation pendant 2 heures. On refroidit rapidement la solution et la dilue pour la ramener à un extrait sec théorique de 24 %.

Le vernis a l'aspect d'un liquide brun rouge, limpide, visqueux.

Son extrait sec (1g, 1h, 180°C) est de 27 % ± 0,5 %.

Sa viscosité à 20°C est d'environ 3 000 mPas.

Sa viscosité intrinsèque à 20°C, dans la NMP, est de 0,5 dl/g.

Ce vernis est soumis à l'émaillage sans autre transformation.

Exemple B - Fabrication d'un vernis par synthèse dans le DMAC selon le procédé connu.

On procède de la même manière que dans l'exemple A (mêmes proportions des réactifs, même mode opératoire), mais la NMP est remplacée en totalité par le DMAC. La dilution est effectuée à un extrait sec théorique de 30 %.

Le vernis a les propriétés suivantes :

Aspect : liquide brun foncé, à reflet orangé, limpide, visqueux .

Extrait sec (1g, 1 heure, 180°C) : 33 %.

Viscosité à 20°C : 400 mPas.

Viscosité intrinsèque dans la NMP, à 20°C, : 0,15 dl/g.

Celle-ci correspond à un degré de condensation plus faible que celui du polymère obtenu par synthèse dans le NMP.

Exemple C - Fabrication d'un vernis par synthèse dans la NMP. Précipitation et séparation de la poudre.

Le produit obtenu dans l'exemple A est repris et précipité à température ambiante dans de l'eau ou de l'acétone sous une forte turbulence, le rapport volume de vernis/volume de l'agent précipitant étant de 1/3. La turbulence est obtenue à l'aide d'un appareil disperseur du type vendu sous la désignation commerciale "ULTRA-TURAX". On obtient en quelques secondes une poudre en suspension de couleur jaune pâle, qui décante facilement en quelques minutes. Cette poudre est filtrée, lavée éventuellement à l'acétone pour favoriser le séchage dans le cas d'une précipitation au contact d'eau, et séchée en étuve ventilée à 80°C. Suivant le temps de séchage, la teneur en solvants résiduels varie de 20 % à 5 % en poids. La viscosité à 20°C dans la NMP est de 0,5 dl/g.

Le mélange de solvant et d'agent précipitant peut être recyclé et la NMP régénérée par distillation.

Par ailleurs, de la poudre obtenue ne subit aucune évolution de ses propriétés au stockage au-dessous d'une température de 150°C.

Exemple D - Redissolution de la poudre dans le DMAC et fabrication du vernis.

100 g de poudre à 95 % de produit solide obtenus dans l'exemple C sont remis en solution dans 300 g de DMAC. Après 15 minutes d'agitation vigoureuse, à température ambiante, on obtient un vernis présentant les propriétés suivantes :

Aspect : liquide brun à reflet orange, limpide.

Extrait sec (1g, 1h, 180°C) : 26 % $\pm$ 0,5 %

Viscosité à 20°C : 1 900 mPas.

Viscosité intrisèque à 20°C dans la NMP : 0,5 dl/g.

Celle-ci est égale à celle du polymère de l'exemple A, et indique donc un degré de condensation du polymère sensiblement égal.

Les vernis préparés selon les exemples A à D ont été émaillés sur fil conducteur. Les caractéristiques des émaux sont indiquées dans le tableau ci-après.

Propriétés des vernis d'émaillage selon les exemple A, B et D et des émaux obtenus à partir de ces vernis.

| | | Exemple A | Exemple B | Exemples C-D |
|---|---|---|---|---|
| | | Fabrication connue dans la NMP. | Fabrication connue dans le DMAC | Synthèse dans la NMP Précipitation de polymère en poudre. Redissolution dans le DMAC du produit solide à 90 % - 95 % |
| Vernis produit fini | Viscosité à 20°C | 4 000 mPas | 400 mPas | 1 900 mPas |
| | Extrait sec (1g, 1h, 180°C) | 27 % | 33 % | 26 % |
| Stockage | Evolution de la viscosité | + 100 % en 4 semaines. à l'ambiante. | + 60 % | Inchangée jusqu'à 150°C sous forme de poudre |
| Mise en oeuvre sur conducteur | Aspect | moyen | médiocre | bon |
| | Souplesse | 10 - 15 % | 10 % | 10 - 15 % |
| | Choc thermique | 10 - 15 % | 10 % | 10 - 15 % |
| | Snap-test | bon | bon | bon |
| | Adhérence torsion | 275 tours | 250 tours | 320 tours |
| | Tension de claquage | 1700 V1/100ê mm | 1500 V1/100ê mm | 1700 V1/100ê mm |
| | Thermoplascité | 420°C | 390°C | 420°C |
| | Tenue au DMAC | 370 v. | 80 v. | 370 v. |
| | Résistance au glissement | 2,8 Kg | 2,5 Kg | 2,5 Kg |
| | Résistance à l'abrasion (essai au va-et-vient). | 200 cycles | 180 cycles | 200 cycles |
| Vieillissement après émaillage | Evolution tension de claquage Evolution glissement. Evolution tenue au DMAC Evolution résistance à l'abrasion (essai au va-et-vient). | - 20 % | - 16 % | - 9 % |

## Revendications

**1)** Procédé de fabrication d'un vernis d'émaillage à base de polyamide-imides, dans lequel on condense un diisocyanate aromatique ou une diamine correspondante avec un acide polycarboxylique aromatique à au

7

moins trois fonctions carboxyles, ou un anhydride, ester ou halogènure d'acide correspondant, en solution dans la N-méthylpyrrolidone, caractérisé en ce que l'on sépare de la solution réactionnelle les polyamide-imides à l'état de poudre par élimination de la N-méthyl-pyrrolidone, puis en ce que l'on dissout la poudre de polyamide-imides dans un solvant formé au moins en partie par un solvant polaire aprotique autre que la N-méthyl-pyrrolidone.

**2)** Procédé selon la revendication 1, caractérisé en ce que la teneur pondérale du solvant de dissolution de la poudre de polyamide-imides en N-méthyl-pyrrolidone est de 0 % à 30 % en poids.

**3)** Procédé selon les revendications 1 ou 2, caractérisé en ce que l'on effectue la séparation des polyamide-imides en poudre de la solution réactionnelle par précipitation de ceux-ci en présence d'un liquide non solvant.

**4)** Procédé selon les revendications 1 à 2, caractérisé en ce que l'on effectue la séparation des polyamide-imides en poudre de la solution réactionnelle par atomisation de celle-ci.

**5)** Procédé selon l'une des revendications 1 à 4, caractérisé en ce que l'on récupère la N-méthyl-pyrrolidone à partir de la solution réactionnelle et la recycle comme solvant réactionnel, et éventuellement comme élément du solvant de dissolution de la poudre de polyamide-imides.

**6)** Procédé selon l'une des revendications 1 à 5, caractérisé en ce que l'on emploie comme autre solvant polaire aprotique que la N-méthylpyrrolidone, la diméthylformamide, la butyrolactone ou le diméthylsulfoxyde.

**7)** Vernis d'émaillage à base de polyamide-imides obtenu par le procédé selon l'une des revendications 1 à 6, caractérisé en ce que sa viscosité intrinsèque, mesurée dans la N-méthyl-pyrrolidone à 20°C, est au moine égale à 0,4 dl/g.

**Office européen des brevets**

**RAPPORT DE RECHERCHE EUROPEENNE**

Numero de la demande

EP 92 40 1422

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|-----------|------------------------------------------------------------------|-------------|------------------|
| A | US-A-3 573 260 (E.F. MORELLO)<br>--- | | C 08 G 73/14<br>C 09 D 179/08<br>H 01 B 3/30<br>C 08 J 3/11 //<br>(C 08 J 3/11<br>C 08 L 79:08 ) |
| D,A | FR-A-2 516 523 (ESSEX GROUP)<br>--- | | |
| D,A | FR-A-1 501 198 (MOBIL OIL)<br>--- | | |
| D,A | FR-A-1 422 711 (BAYER)<br>----- | | |

**DOMAINES TECHNIQUES RECHERCHES (Int. Cl.5)**

C 08 G
C 09 D
H 01 B
C 08 J

Le présent rapport a été établi pour toutes les revendications

| Lieu de la recherche | Date d'achèvement de la recherche | Examinateur |
|----------------------|-----------------------------------|-------------|
| LA HAYE | 24-07-1992 | LEROY ALAIN |

EPO FORM 1503 03.82 (P0402)